# EUROPEAN PATENT SPECIFICATION

(11) **EP 3 767 018 B1**
(45) Date of publication and mention of the grant of the patent: **10.05.2023**
(21) Application number: 19891680.1
(22) Date of filing: 20.09.2019
(51) Int. Cl.: D02G 3/02, D01D 5/00, C08G 73/10, D01D 5/06, D01F 6/74, D01F 6/76, D01F 6/80, D02J 1/22, D01F 6/88, D01F 6/94, D02G 3/06

(54) **PREPARATION PROCESS FOR AND USE OF SUPER-HIGH-COUNT PI-PSA ELECTROSPUN FIBER LONG-STAPLE YARN**
VERFAHREN ZUR HERSTELLUNG UND VERWENDUNG EINES LANGSTAPELIGEN GARNS MIT SEHR HOHER ANZAHL AN ELEKTROGESPONNENEN PI-PSA-FASERN
PROCÉDÉ DE PRÉPARATION ET UTILISATION D'UN FIL DE FIBRES COUPÉES LONGUES DE FIBRES ÉLECTROFILÉES PI-PSA À NOMBRE TRÈS ÉLEVÉ

(30) Priority: 21.05.2019 CN 201910422374
(43) Date of publication of application: 20.01.2021
(73) Proprietor: JIANGXI ADVANCED NANOFIBER S&T CO., LTD, High-Tech District Nanchang Jiangxi 330096 (CN)
(72) Inventor: HOU, Haoqing, Jiangxi 330096 (CN); PAN, Pingping, Jiangxi 330096 (CN); CHENG, Chuyun, Jiangxi 330096 (CN); WANG, Yuming, Jiangxi 330096 (CN); OUYANG, Wen, Jiangxi 330096 (CN)
(74) Representative: Fuchs Patentanwälte Partnerschaft mbB
(86) International application number: PCT/CN2019/106943
(87) International publication number: WO 2020/232930

(56) References cited:
- CN-A- 101 974 828
- CN-A- 102 383 222
- CN-A- 102 493 015
- CN-A- 104 674 452
- CN-A- 106 087 243
- CN-A- 107 354 589
- CN-A- 109 735 917
- CN-A- 110 195 278
- LI LIU ET AL: "Preparation of polysulfoneamide electrospinning nanofibers", ELECTRONIC PACKAGING TECHNOLOGY&HIGH DENSITY PACKAGING, 2008. ICEPT-HDP 2008. INTERNATIONAL CONFERENCE ON, IEEE, PISCATAWAY, NJ, USA, 28 July 2008 (2008-07-28), pages 1-4, XP031312547, ISBN: 978-1-4244-2739-0

## Description

### Technical Field

The present invention belongs to the technical field of chemical fiber spinning, more particularly, the present invention relates to a process for preparing an ultra-high-count filament yarn of PI-PSA electrospun fiber and uses thereof.

### Background

Polyimide (PI) fiber is regarded as one of the most promising high-performance fiber materials due to its unique rigid aromatic heterocyclic structure. Because of its excellent mechanical, thermal and dielectric properties, it is widely used in aerospace, high temperature and heat resistance, electronic devices and other fields. Polysulfonamide (PSA) is one of the most important polyaramid fiber materials, and is a high-performance fiber with sulfone groups (-SO₂-), aromatic rings and amide bonds (-CONH-) on the macromolecular main chain, and there are hydrogen bonds between the molecules and the interaction is enhanced. It is very necessary to combine the high temperature resistance of polyimide with the intermolecular lateral reinforcement effect of polysulfone amide to produce a composite nanofiber with good high temperature resistance and high mechanical strength, and it has a potentially huge application market.

At present, the more commonly used method for preparing PI fiber is a two-step method, i.e, the polyamic acid (PAA) prepolymer is obtained by polycondensation reaction of dianhydride and diamine monomers in a polar solvent, the PAA primary fiber is prepared by a wet spinning process, and then the PI fiber is obtained through the process of thermal imidization or chemical imidization. CN107354589A discloses a method for preparing an abrasion-resistant and high temperature-resistant porous fibrous membrane, wherein the method comprises the steps of preparation of spinning solution and electrostatic spinning. LI Liu et al (Preparation of polysulfone amide electrospinning nanofibers, 2008, International Conference on Electronic Packaging Technology & High Density Packaging*)* discloses a method for fabricating polysulfonamide nanofibers, wherein the polysulfonamide was prepared based on 4,4'-diaminodiphenylsulfone and terephthaloyl chloride in N,N-Dimethylacetamide (DMAc). CN101974828A discloses a preparation method of copolymerized polyimide nanofiber, which comprises: reacting a tetracid dianhydride monomer with a diamine monomer by taking a high-polar solvent as a reaction medium; performing condensation polymerization through mechanical agitation; and performing electrostatic spinning on the copolymerized polyimide acid solution in a high-voltage electric field.

However, the current electrostatic spinning technology is only used to manufacture non-woven fabrics or spray a thin layer of nano-cobweb on industrial non-woven fabrics generally with an areal density of about 1 g/m², which can also manufacture discontinuous and higher linear density of thick yarn, and the linear density of conventional fiber yarns is above 6 Tex, and the counts of the yarns are generally less than 150 counts, and most of them are below 100 counts. Therefore, there is no technology to continuously manufacture yarns of electrospun PI/PSA composite (nano) fibers that simultaneously satisfy ultra-small linear density or ultra-high-count, good temperature resistance, and excellent mechanical properties.

### Summary

To solve the above problems, the first aspect of the present invention provides a process for preparing an ultra-high-count filament yarn of PI-PSA electrospun fiber, wherein the process comprises:

step 1: after a monomer (I) and a monomer (II) are purified, adding the monomer (I) and the monomer (II) to a polymerization reactor together with a solvent to obtain a polyamic acid solution, then mechanically mixing with PSA to obtain a spinning raw material liquid of the polyamic acid and the PSA;

step 2: implementing electrostatic spinning to the spinning raw material liquid in a high-voltage electric field, and collecting to obtain a polyamic acid/PSA electrospun fiber felt or nonwoven fabric using a stainless steel mesh belt as a collector;

step 3: cutting the polyamic acid/PSA electrospun fiber felt or nonwoven fabric obtained above into slender strips with a width of 0.5 to 5.0 cm, and thermally drafting and imidizing the strips to form an oriented electrospun fiber bundle;

step 4: twisting the above electrospun fiber bundle to obtain an ultra-high-count filament yarn of PI-PSA electrospun composite fibers.

Wherein, the monomer (I) is a dianhydride which structural formula is: 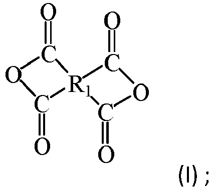
the monomer (II) is a diamine which structural formula is:

   H₂N-R₂-NH₂ (II);
the obtained polyimide has the following chemical structure formula: 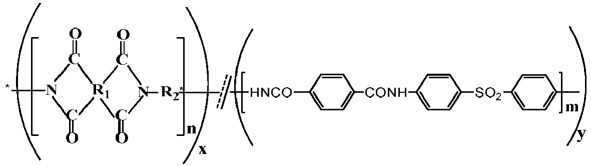
wherein n and m values are natural numbers between 100 and 500; R₁ is the residue structure of C4-C30 dianhydride monomer, and is one or more selected from the group consisting of pyromelliticdianhydride residue, biphenyl dianhydride residue, diphenylsulfonedianhydride residue, triphenylenedietherdianhydride residue, terephthalicdianhydride residue, 2.6-biphenyl pyrimidine dianhydride residue, benzophenonedianhydride residue, 3,6 bridged alkene cyclohexane tetracarboxylicdianhydride residue, hexafluoroacetonediphenyldianhydride residue, diphenoldiphenyldietherdianhydride residue, diphenyl sulfide dianhydride residue, diphenyl sulfide dianhydride residue, and 2,2-acetone biphenyl dianhydride residue; R₂ is the residue structure of C6-C30 diamine monomer and is one or more selected from the group consisting of diphenyl ether diamine residue, p-phenylenediamine residue, dimethoxybenzidine residue, diphenylmethanediamine residue, m-phenylenediamine residue, biphenyldiamine residue, diphenoxydiphenoldiamine residue, 2-methyldiphenyl ether diamine residue, 2,6-pyrimidine diphenyldiamine residue, and (3,3'-dimethyl) diphenylmethanediamine residue; the ratio of two polymers PI and PSA, i.e., the mass ratio x/y = (1-9): (1-9).

According to a preferred embodiment, the solvent during the preparation of the spinning raw material liquid is a polar organic solvent and is one or more selected from the group consisting of N, N-dimethylformamide, N-methylpyrrolidone, dimethylsulfoxide, and N, N-dimethylacetamide.

According to another preferred embodiment, the reaction condition during the preparation of the spinning raw material liquid is: the polymerization reaction temperature of the stainless steel reactor is 0 to 30°C, and the reaction time is 1 to 10 hours to obtain a polyamic acid solution, and then adding a PSA powder or a PSA staple fiber to the polyamic acid solution, mechanically stirring at 0 to 30°C to dissolve and mix, and finally adding N, N-dimethylacetamide for dilution.

According to another yet preferred embodiment, the absolute viscosity of the spinning raw material liquid is 1.5 to 5.5 Pa•s.

According to another yet preferred embodiment, the processing parameters of the electrostatic spinning are: the distance between the spinneret and the stainless steel mesh belt collector is 8 to 50 cm, the electric field strength of the high voltage electrostatic field is 100 to 650 kV/m, and the travel speed of the stainless steel mesh belt is 0.2 to 5 m/min.

According to another yet preferred embodiment, the thermally drafting and imidizing process parameters are: the draft processing is a three-stage 5-roll draft: in the first stage, the draft unwinding speed is 5 to 10 m/min, the draft ratio is 1 to 5 times, the draft temperature is 160 to 220°C; the second stage, the draft unwinding speed is 3 to 8 m/min, the draft ratio is 1 to 5 times, the draft temperature is 280 to 320°C; in the third stage, the draft unwinding speed is 1 to 5 m/min, the draft ratio is 1 to 3 times, the draft temperature is 350 to 400°C.

According to another yet preferred embodiment, the twisting process parameters are: the twisting unwinding speed is 5 to 80 m/min, and the twist degree is 300 to 2500 twist/m.

The second aspect of the present invention provides an ultra-high-count filament yarn of PI-PSA electrospun fiber prepared according to the above preparation process.

According to a preferred embodiment, the single-strand yarn of the ultra-high-count filament yarn of PI-PSA electrospun fiber has a count of 500-1500 metric counts or 300-900 English counts and a continuous length of more than 2000 meters.

The third aspect of the present invention provides a use of the ultra-high-count filament yarn of PI-PSA electrospun fiber in high-grade fabrics, high-grade clothing, ultra-thin high-performance fiber cloth, high-performance composite membrane materials, high-performance composite board materials, high-performance cordages and cables.

Beneficial effects: the ultra-high-count filament yarn of PI-PSA electrospun fiber prepared by the preparation process of the present invention has a count of 1000 to 1500 metric counts, a continuous length of more than 2000 meters, and has excellent mechanical properties, which solves the technical problem that it is difficult to continuously manufacture ultra-small linear density or ultra-high-count electrospun (nano) fiber yarns, and provides an efficient and advanced preparation process for manufacturing these fibers.

### Detailed Description of The Embodiments

The technical features in the technical solutions provided by the present invention will be further described clearly and completely in conjunction with the specific embodiments, and are not intended to limit the protection scope thereof.

The words "preferred", "more preferred", etc. in the present invention refer to an embodiment of the present invention that can provide certain beneficial effects under certain circumstances. However, other embodiments may also be preferred under the same or other circumstances. In addition, the expression of one or more preferred embodiments does not imply that other embodiments are not available, nor is it intended to exclude other embodiments from the scope of the present invention.

When a range of valuesis disclosed herein, the above range is considered continuous and includes the minimum and maximum values of the range, and each value between such minimum and maximum values. Further, when the range refers to an integer, every integer between the minimum value and the maximum value of the range is included. In addition, when multiple ranges are provided to describe features or characteristics, the ranges may be combined. In other words, unless otherwise indicated, all ranges disclosed herein should be understood to include any and all subranges subsumed therein. For example, the specified range from "1 to 10" should be considered to include any and all subranges between the minimum value 1 and the maximum value 10. Exemplary subranges of range 1 to 10 include, but are not limited to, 1 to 6.1, 3.5 to 7.8, 5.5 to 10, and etc.

To solve the above problems, the first aspect of the present invention provides a process for preparing an ultra-high-count filament yarn of PI-PSA electrospun fiber, comprising:
step 1: after a monomer (I) and a monomer (II) are purified, adding the monomer (I) and monomer (II) to a polymerization reactor together with a solvent to obtain a polyamic acid solution, then mechanically mixing with PSA to obtain a spinning raw material liquid of the polyamic acid and the PSA;
step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector;
step 3: cutting the polyamic acid/PSA electrospun fiber felt or nonwoven fabric obtained above into slender strips with a width of 0.5 to 5.0 cm, and thermally drafting and imidizing the strips to form an oriented electrospun fiber bundle;
step 4: twisting the above electrospun fiber bundle to obtain an ultra-high-count filament yarn of PI-PSA electrospun composite fibers.

### Step 1

The ultra-high-count filament yarn of PI-PSA electrospun fiber of the present invention, which has a chemical composition or structure obtained by condensation polymerization of two monomers (I) and (II) to obtain polyamic acid, which is blended with PSA solution to form a spinning raw material liquid, and then proceed to the next step.

In a preferred embodiment, the monomer (I) is a dianhydride which structural formula is: 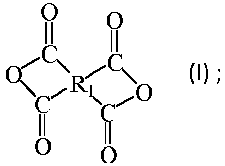 where R₁ is one or more of the following dianhydride residue structures:

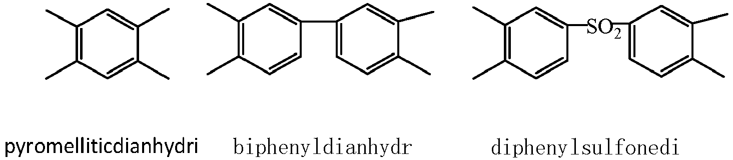

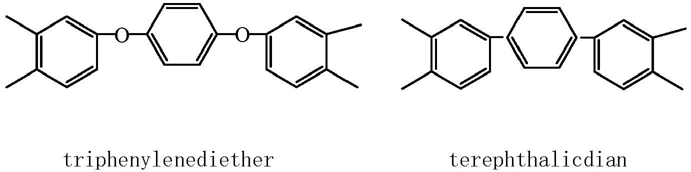

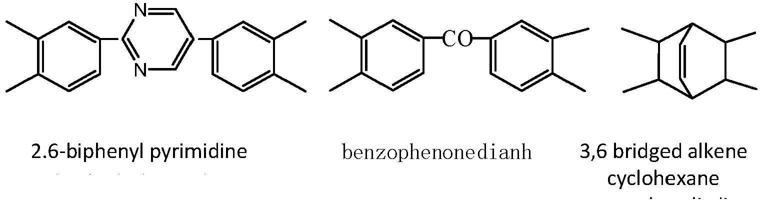

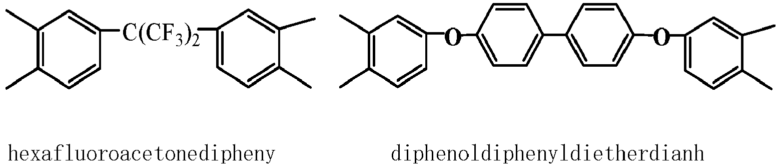

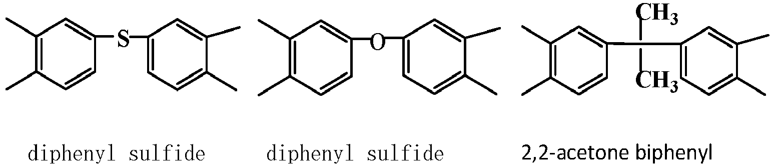

In a preferred embodiment, the monomer (II) is a diamine which structural formula is:

H₂N-R₂-NH₂ (II);

where R₂ is one or more of the following diamine residue structures:

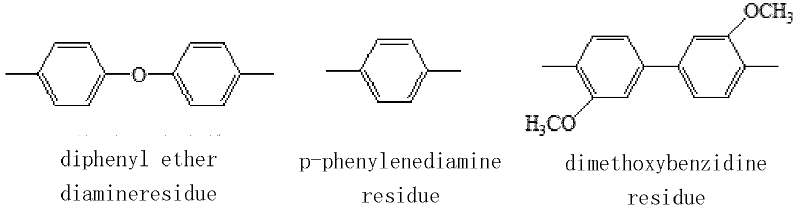

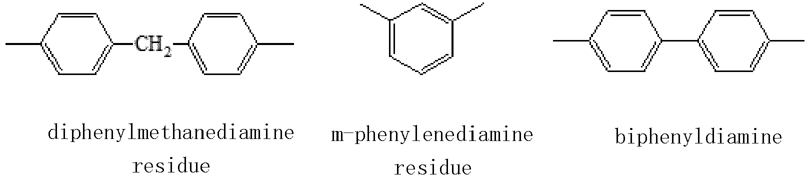

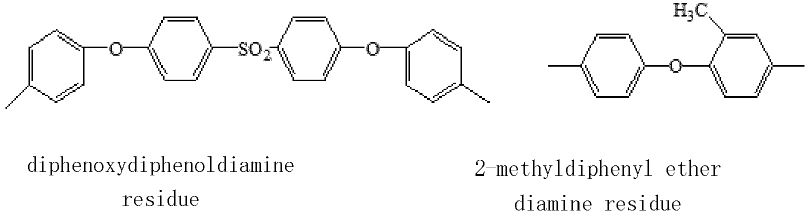

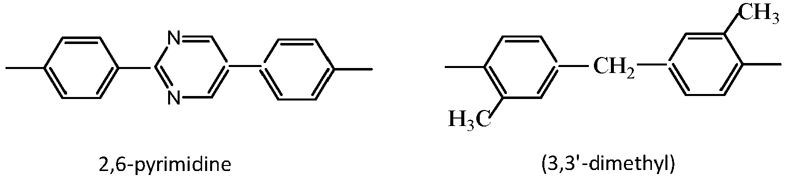

In some embodiments, the obtained polyimide has the following chemical structure formula:

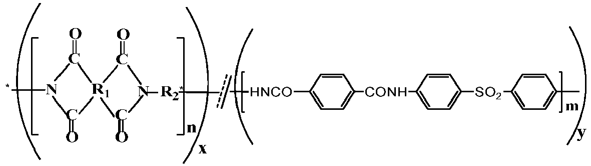

In a preferred embodiment, the above n and m values are natural numbers between 100 and 500; R₁ is the residue structure of C4-C30 dianhydride monomer, and is one or more selected from pyromelliticdianhydride residue, biphenyl dianhydride residue, diphenylsulfonedianhydride residue, triphenylenedietherdianhydride residue, terephthalicdianhydride residue, 2.6-biphenyl pyrimidine dianhydride residue, benzophenonedianhydride residue, 3,6 bridged alkene cyclohexane tetracarboxylicdianhydrideresidue, hexafluoroacetonediphenyldianhydride residue, diphenoldiphenyldietherdianhydride residue, diphenyl sulfide dianhydride residue, diphenyl sulfide dianhydride residue, and 2,2-acetone biphenyl dianhydride residue; R₂ is the residue structure of C6-C30 diamine monomer and is one or more selected from diphenyl ether diamine residue, p-phenylenediamine residue, dimethoxybenzidine residue, diphenylmethanediamine residue, m-phenylenediamine residue, biphenyldiamine residue, diphenoxydiphenoldiamine residue, 2-methyldiphenyl ether diamine residue, 2,6-pyrimidine diphenyldiamine residue, and (3,3'-dimethyl) diphenylmethanediamine residue; the ratio of two polymers PI and PSA, i.e, the mass ratio x/y = (1-9): (1-9).

In a preferred embodiment, the ratio of the total amount of dianhydride monomers to the total amount of diamine monomers in the polycondensation reaction is always maintained at 1: 1.

In a preferred embodiment, the solvent during the preparation of the spinning raw material liquid is a polar organic solvent and is one or more selected from the group consisting of N, N-dimethylformamide, N-methylpyrrolidone, dimethylsulfoxide, and N, N-dimethylacetamide.

More preferably, the solvent in the preparation process of the spinning raw material liquid is a mixed solvent of N, N-dimethylacetamide and N, N-dimethylformamide; further preferably, the solvent is a mixed solvent obtained by compounding N, N-dimethylacetamide and N, N-dimethylformamide at a volume ratio of (3-8): 1; most preferably, the solvent is a mixed solvent obtained by compounding N, N-dimethylacetamide and N, N-dimethylformamide at a volume ratio of 6.3: 1.

In a preferred embodiment, the reaction condition during the preparation of the spinning raw material liquid is: the polymerization reaction temperature of the stainless steel reactor is 0 to 30°C, and the reaction time is 1 to 10 hours to obtain a polyamic acid solution, and then adding a PSA powder or a PSA staple fiber to the polyamic acid solution, mechanically stirring at 0 to 30°C to dissolve and mix, and finally adding N, N-dimethylacetamide for dilution.

In a preferred embodiment, the reaction condition during the preparation of the spinning raw material liquid is: the polymerization reaction temperature of the stainless steel reactor is 0 to 30°C, and the reaction time is 1 to 10 hours to obtain a polyamic acid solution, and then adding a PSA powder or a PSA staple fiber to the polyamic acid solution according to the mass ratio of polymer PI and PSA is (1-9): (1-9), mechanically stirring at 0 to 30°C to dissolve and mix, and finally adding N, N-dimethylacetamide for dilution.

In a more preferred embodiment, the reaction condition during the preparation of the spinning raw material liquid is: the polymerization reaction temperature of the stainless steel reactor is 0 to 30°C, and the reaction time is 1 to 10 hours to obtain a polyamic acid solution, and then adding a PSA powder or a PSA staple fiber to the polyamic acid solution according to the mass ratio of polymer PI and PSA is (1-7): (1-8), mechanically stirring at 0 to 30°C to dissolve and mix, and finally adding N, N-dimethylacetamide for dilution.

In a preferred embodiment, the absolute viscosity of the spinning raw material liquid is 1.5 to 5.5 Pa•s.

More preferably, the absolute viscosity of the spinning raw material liquid is 2 to 5 Pa•s; further preferably, the absolute viscosity of the spinning raw material liquid is 2 to 4 Pa•s.

The absolute viscosity described here is also called dynamic viscosity, which is the magnitude of the tangential force required per square centimeter of the liquid surface when the liquid flows at a flow rate of 1 cm/s, and the unit is "Pa•s". The absolute viscosity value is measured with a digital display viscometer SNB-1.

In a preferred embodiment, the step 1: after a monomer (I) and a monomer (II) are purified, adding the monomer (I) and the monomer (II) to a polymerization reactor at a molar ratio of 1: 1, and adding the solvent with a mass of 5.5 times the total mass of the monomers at 0 to 30°C to react for 1 to 10 hours to obtain a polyamic acid solution, and then adding a PSA powder or a PSA staple fiber to the polyamic acid solution according to the mass ratio of polymer PI and PSA is (1-9): (1-9), mechanically stirring at 0 to 30°C to dissolve and mix, and finally adding an appropriate amount of N, N-dimethylacetamide to dilute to an absolute viscosity of 1.5 to 5.5 Pa•s to obtain a spinning raw material liquid of the polyamic acid and the PSA.

In the above preparation process, the inventors first adopt tetracarboxylicdianhydride monomer and diamine monomer which are through a polycondensation reaction and blended with PSA solution to form a polyamic acid/PSA mixed solution, and the addition of PSA solution can increase the viscosity, increase the viscosity of the system, and avoid the occurrence of solution droplets; in addition, the addition of PSA solution increases the continuous length, presumably because it reacts with polyamic acid to physically crosslink, further increasing its viscosity, and its rigid structure is dispersed in the polyimide polymer, which also through intermolecular forces such as hydrogen bond association between heteroatoms, further limits the shrinkage due to high-temperature crystallization, avoids defects such as cracks on the fiber surface, and is conducive to the formation ultra-high-count filament yarn.

### Step 2

In the step 2 of the present invention, the spinning raw material liquid obtained above is electrostatically spun into a polyamic acid/PSA composite fiber felt or nonwoven fabric, and then the next step is performed.

In a preferred embodiment, the processing parameters of the electrostatic spinning are: the distance between the spinneret and the stainless steel mesh belt collector is 8 to 50 cm, the electric field strength of the high voltage electrostatic field is 100 to 650 kV/m, and the travel speed of the stainless steel mesh belt is 0.2 to 5 m/min.

More preferably, the processing parameters of the electrostatic spinning are: the distance between the spinneret and the stainless steel mesh belt collector is 10 to 40 cm, the electric field strength of the high voltage electrostatic field is 250 to 550 kV/m, and the travel speed of the stainless steel mesh belt is 1 to 4 m/min.

In a preferred embodiment, the step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector, wherein the distance between the spinneret and the stainless steel mesh belt collector is 8 to 50 cm, the electric field strength of the high voltage electrostatic field is 100 to 650 kV/m, and the travel speed of the stainless steel mesh belt is 0.2 to 5 m/min, and the polyamic acid/PSA electrospun fiber felt or nonwoven fabric is collected.

### Step 3

In the step 3 of the present invention, the polyamic acid/PSA electrospun fiber felt or nonwoven fabric obtained above is cut into strips, and then imidized and drafted into ultrafine oriented tows at high temperature, and then the next step is performed.

In a preferred embodiment, the thermally drafting and imidizing process parameters are: the draft processing is a three-stage 5-roll draft: in the first stage, the draft unwinding speed is 5 to 10 m/min, the draft ratio is 1 to 5 times, the draft temperature is 160 to 220°C; the second stage, the draft unwinding speed is 3 to 8 m/min, the draft ratio is 1 to 5 times, the draft temperature is 280 to 320°C; in the third stage, the draft unwinding speed is 1 to 5 m/min, the draft ratio is 1 to 3 times, the draft temperature is 350 to 400°C.

In a preferred embodiment, the fiber orientation degree of the fiber bundle is greater than 75%.

The degree of orientation described here refers to the degree of regular arrangement of various structural units such as macromolecules or segments including microcrystals along the fiber axis. The numerical value of the degree of orientation is measured by the digital fiber sound velocimeter MC68VZ328.

In a preferred embodiment, the step 3: cutting the fabric of polyamic acid/PSA electrospun fiber felt or nonwoven fabric obtained above into slender strips with a width of 0.5 to 5.0 cm, and thermally drafting and imidizing the strips to form an oriented electrospun fiber bundle, wherein the thermally drafting and imidizing process parameters are: the draft processing is a three-stage 5-roll draft: in the first stage, the draft unwinding speed is 5 to 10 m/min, the draft ratio is 1 to 5 times, the draft temperature is 160 to 220°C; the second stage, the draft unwinding speed is 3 to 8 m/min, the draft ratio is 1 to 5 times, the draft temperature is 280 to 320°C; in the third stage, the draft unwinding speed is 1 to 5 m/min, the draft ratio is 1 to 3 times, the draft temperature is 350 to 400°C.

During the research, the inventors found that the fibers were easily entangled or broken due to the association phenomenon when they were directly drafted without cutting the strip, so they were cut into thin strips. It was unexpectedly found that when the width was 0.5 to 5.0 cm, the obtained fibers had a high count and a longer length, and the inventors speculated that this may be due to increased fiber orientation during the thermal drafting of polyimide.

Secondly, the inventors found that in order to achieve the best continuous length of the filament yarn of the present invention, using the thermal drafting and imidizing process of the present invention after cutting the strips, the continuous length could reach more than 2000 meters. This is because the first-stage drafting temperature was 160 to 220°C, in this temperature range, the molecular motion force of the amorphous region of the disordered structure was enhanced. In order to reduce the excessive heteroatom association between the introduced PSA solution and the system, 1 to 5 times tension drafting was used to promote a certain degree of damage of the physical crosslinking between molecular chains, and orientation was carried out under internal stress, while if the temperature in this stage was below 160 to 220°C, due to the association crosslinking between the molecular chains and the insufficient movement of the ordered oriented molecular chains, the molecules were too rigid to be fully imidized in the subsequent stage, so it was difficult to obtain higher molecular weight, making the fiber brittle and was not conducive to obtaining ultra-long yarn. The second stage temperature was 280 to 320°C for 1 to 5 times drafting, and the imidizing reaction began in the amorphous region, as the degree of orientation increased, the content of the imidized structure increased, making the orientation structure of the molecular chain more conducive to form an aromatic layer structure with a larger area and increase the internal stress. Then, the third stage temperature was 350 to 400°C, with the imidizing reaction in the crystal region, deformation of the system decreased, elongation at break decreased, and the draft ratio was adjusted to 1 to 3 times, which effectively avoided fiber defects caused by unnecessary cross linking between the excess imide rings and the introduced aromatic heterocyclic rings, and obtained ultra-high-count filament yarn while improving the mechanical properties.

### Step 4

In the fourth step of the present invention, twisting the above electrospun fiber bundle to obtain an ultra-high-count filament yarn of PI-PSA electrospun composite fiber.

In a preferred embodiment, the twisting process parameters are: the twisting unwinding speed is 5 to 80 m/min, and the twist degree is 300 to 2500 twist/m.

In a preferred embodiment, the step 4: twisting the above electrospun fiber bundle, wherein the twisting unwinding speed is 5 to 80 m/min, and the twist degree is 300 to 2500 twist/m, and finally an ultra-high-count filament yarn of PI/PSA electrospun composite fiber is obtained.

The second aspect of the present invention provides an ultra-high-count filament yarn of PI-PSA electrospun fiber prepared according to the above preparation process.

In a preferred embodiment, the single-strand yarn of the ultra-high-count filament yarn of PI-PSA electrospun fiber has a count of 500-1500 metric counts or 300-900 English counts and a continuous length of more than 2000 meters.

The counts described here include metric and English counts, both of which indicate the thickness of the yarn, and the higher the count, the finer the yarn, and metric count = 1.715 English count.

The third aspect of the present invention provides a use of the ultra-high-count filament yarn of PI-PSA electrospun fiber in high-grade fabrics, high-grade clothing, ultra-thin high-performance fiber cloth, high-performance composite membrane materials, high-performance composite board materials, high-performance cordages and cables.

The present invention will be described in detail with the following examples. In addition, if there is no other explanation, the raw materials used are all commercially available.

### Examples

### Example 1

Example 1 provided a process for preparing an ultra-high-count filament yarn of PI-PSA electrospun fiber, comprising the steps of:
step 1, after a monomer (I) and a monomer (II) are purified, adding the monomer (I) and the monomer (II) to a polymerization reactor at a molar ratio of 1: 1, and adding the solvent with a mass of 5.5 times the total mass of the monomers at 0°C to react for 10 hours to obtain a polyamic acid solution, and then adding a PSA powder or a PSA staple fiber to the polyamic acid solution according to the mass ratio of polymer PI and PSA is 3: 8, mechanically stirring at 0°C to dissolve and mix, and finally adding an appropriate amount of N, N-dimethylacetamide to dilute to an absolute viscosity of 2.8 Pa•s to obtain a spinning raw material liquid of the polyamic acid and the PSA;
   Wherein, the monomer (I) is a dianhydride having the structure of general formula (I) where R₁ is a biphenyl dianhydride residue, and the monomer (II) is a diamine having the structure of general formula (II) wherein R₂ is a p-phenylenediamine residue; the solvent is a mixed solvent obtained by compounding N, N-dimethylacetamide and N, N-dimethylformamide at a volume ratio of 6.3: 1;
step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector, wherein the distance between the spinneret and the stainless steel mesh belt collector is 8 cm, the electric field strength of the high voltage electrostatic field is to 100 kV/m, and the travel speed of the stainless steel mesh belt is 0.5 m/min, and the polyamic acid/PSA electrospun nonwoven fabric is collected;
step 3: cutting the polyamic acid/PSA electrospun nonwoven fabric obtained above into slender strips with a width of 0.5 cm, and thermally drafting and imidizing the strips to form an oriented electrospun fiber bundle with an orientation degree of 75%, wherein the thermally drafting and imidizing process parameters are: the draft processing is a three-stage 5-roll draft: in the first stage, the draft unwinding speed is 5 m/min, the draft ratio is 1 time, the draft temperature is 160°C; in the second stage, the draft unwinding speed is 3 m/min, the draft ratio is 1 time, the draft temperature is 280°C; in the third stage, the draft unwinding speed is 1 m/min, the draft ratio is 1 time, the draft temperature is 350°C;
step 4: twisting the above electrospun fiber bundle, wherein the twisting unwinding speed is to 5 m/min, and the twist degree is to 300 twist/m, and finally an ultra-high-count filament yarn of PI/PSA electrospun composite fiber is obtained.

### Example 2

Example 2 provided a process for preparing an ultra-high-count filament yarn of PI-PSA electrospun fiber, comprising the steps of:
step 1, after a monomer (I) and a monomer (II) are purified, adding the monomer (I) and the monomer (II) to a polymerization reactor at a molar ratio of 1: 1, and adding the solvent with a mass of 5.5 times the total mass of the monomers at 30°C to react for 1 hours to obtain a polyamic acid solution, and then adding a PSA powder or a PSA staple fiber to the polyamic acid solution according to the mass ratio of polymer PI and PSA is 7: 1, mechanically stirring at 30°C to dissolve and mix, and finally adding an appropriate amount of N, N-dimethylacetamide to dilute to an absolute viscosity of 3.4 Pa•s to obtain a spinning raw material liquid of the polyamic acid and the PSA;
   Wherein, the monomer (I) is a dianhydride having the structure of general formula (I) where R₁ is a benzophenonedianhydride residue, and the monomer (II) is a diamine having the structure of general formula (II) wherein R₂ is a dimethoxybenzidine residue; the solvent is a mixed solvent obtained by compounding N, N-dimethylacetamide and N, N-dimethylformamide at a volume ratio of 6.3: 1;
step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector, wherein the distance between the spinneret and the stainless steel mesh belt collector is 50 cm, the electric field strength of the high voltage electrostatic field is to 650 kV/m, and the travel speed of the stainless steel mesh belt is to 5 m/min, and the polyamic acid/PSA electrospun nonwoven fabric is collected;
step 3: cutting the polyamic acid/PSA electrospun nonwoven fabric obtained above into slender strips with a width of 0.5 cm, and thermally drafting and imidizing the strips to form an oriented electrospun fiber bundle with an orientation degree of 82%, wherein the thermally drafting and imidizing process parameters are: the draft processing is a three-stage 5-roll draft: in the first stage, the draft unwinding speed is 10 m/min, the draft ratio is 1 time, the draft temperature is 220°C; in the second stage, the draft unwinding speed is 8 m/min, the draft ratio is 1 time, the draft temperature is 320°C; in the third stage, the draft unwinding speed of is 5 m/min, the draft ratio is 1 time, the draft temperature is 400°C;
step 4: twisting the above electrospun fiber bundle, wherein the twisting unwinding speed is to 60 m/min, and the twist degree is to 2500 twist/m, and finally an ultra-high-count filament yarn of PI/PSA electrospun composite fiber is obtained.

### Example 3

Example 3 provided a process for preparing an ultra-high-count filament yarn of PI-PSA electrospun fiber, comprising the steps of:
step 1, after a monomer (I) and a monomer (II) are purified, adding the monomer (I) and the monomer (II) to a polymerization reactor at a molar ratio of 1: 1, and adding the solvent with a mass of 5.5 times the total mass of the monomers at 20°C to react for 5 hours to obtain a polyamic acid solution, and then adding a PSA powder or a PSA staple fiber to the polyamic acid solution according to the mass ratio of polymer PI and PSA is 1: 5, mechanically stirring at 20°C to dissolve and mix, and finally adding an appropriate amount of N, N-dimethylacetamide to dilute to an absolute viscosity of 2.9 Pa•s to obtain a spinning raw material liquid of the polyamic acid and the PSA;
   Wherein, the monomer (I) is a dianhydride having the structure of general formula (I) where R₁ is a diphenyl sulfide dianhydride residue, and the monomer (II) is a diamine having the structure of general formula (II) wherein R₂ is a 2-methyldiphenyl ether diamine residue; the solvent is a mixed solvent obtained by compounding N, N-dimethylacetamide and N, N-dimethylformamide at a volume ratio of 6.3: 1.
Step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector, wherein the distance between the spinneret and the stainless steel mesh belt collector is 10 cm, the electric field strength of the high voltage electrostatic field is to 250 kV/m, and the travel speed of the stainless steel mesh belt is to 1 m/min, and the polyamic acid/PSA electrospun nonwoven fabric is collected;
Step 3: cutting the polyamic acid/PSA electrospun nonwoven fabric obtained above into slender strips with a width of 1 cm, and thermally drafting and imidizing the strips to form an oriented electrospun fiber bundle with an orientation degree of 85%, wherein the thermally drafting and imidizing process parameters are: the draft processing is a three-stage 5-roll draft: in the first stage, the draft unwinding speed is 7 m/min, the draft ratio is 2 times, the draft temperature is 180°C; in the second stage, the draft unwinding speed is 4 m/min, the draft ratio is 2 times, the draft temperature is 290°C; in the third stage, the draft unwinding speed is 2 m/min, the draft ratio is 2 times, the draft temperature is 360°C.
Step 4: twisting the above electrospun fiber bundle, wherein the twisting unwinding speed is to 45 m/min, and the twist degree is to 1100 twist/m, and finally an ultra-high-count filament yarn of PI/PSA electrospun composite fiber is obtained.

### Example 4

Example 4 provided a process for preparing an ultra-high-count filament yarn of PI-PSA electrospun fiber, comprising the steps of:
step 1, after a monomer (I) and a monomer (II) are purified, adding the monomer (I) and the monomer (II) to a polymerization reactor at a molar ratio of 1: 1, and adding the solvent with a mass of 5.5 times the total mass of the monomers at 20°C to react for 5 hours to obtain a polyamic acid solution, and then adding a PSA powder or a PSA staple fiber to the polyamic acid solution according to the mass ratio of polymer PI and PSA is 3: 4, mechanically stirring at 20°C to dissolve and mix, and finally adding an appropriate amount of N, N-dimethylacetamide to dilute to an absolute viscosity of 3.5 Pa•s to obtain a spinning raw material liquid of the polyamic acid and the PSA;
   Wherein, the monomer (I) is a dianhydride having the structure of general formula (I) where R₁ is a diphenoldiphenyldietherdianhydride residue, and the monomer (II) is a diamine having the structure of general formula (II) wherein R₂ is a diphenyl ether diamine residue; the solvent is a mixed solvent obtained by compounding N, N-dimethylacetamide and N, N-dimethylformamide at a volume ratio of 6.3: 1;
Step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector, wherein the distance between the spinneret and the stainless steel mesh belt collector is 40 cm, the electric field strength of the high voltage electrostatic field is to 550 kV/m, and the travel speed of the stainless steel mesh belt is to 4 m/min, and the polyamic acid/PSA electrospun nonwoven fabric is collected
Step 3: cutting the polyamic acid/PSA electrospun nonwoven fabric obtained above into slender strips with a width of 4 cm, and thermally drafting and imidizing the strips to form an oriented electrospun fiber bundle with an orientation degree of 88%, wherein the thermally drafting and imidizing process parameters are: the draft processing is a three-stage 5-roll draft: in the first stage, the draft unwinding speed is 9 m/min, the draft ratio is 4 times, the draft temperature is 200°C; in the second stage, the draft unwinding speed is 6 m/min, the draft ratio is 2 times, the draft temperature is 310°C; in the third stage, the draft unwinding speed is 4 m/min, the draft ratio is 4 times, the draft temperature is 390°C.
Step 4: twisting the above electrospun fiber bundle, wherein the twisting unwinding speed is to 45 m/min, and the twist degree is to 1100 twist/m, and finally an ultra-high-count filament yarn of PI/PSA electrospun composite fiber is obtained.

### Example 5

Example 5 provided a process for preparing an ultra-high-count filament yarn of PI-PSA electrospun fiber, comprising the steps of:
step 1, after a monomer (I) and a monomer (II) are purified, adding the monomer (I) and the monomer (II) to a polymerization reactor at a molar ratio of 1: 1, and adding the solvent with a mass of 5.5 times the total mass of the monomers at 20°C to react for 5 hours to obtain a polyamic acid solution, and then adding a PSA powder or a PSA staple fiber to the polyamic acid solution according to the mass ratio of polymer PI and PSA is 7: 4, mechanically stirring at 20 °C to dissolve and mix, and finally adding an appropriate amount of N, N-dimethylacetamide to dilute to an absolute viscosity of 3.2 Pa•s to obtain a spinning raw material liquid of the polyamic acid and the PSA;
   Wherein, the monomer (I) is a dianhydride having the structure of general formula (I) where R₁ is a triphenyletherdianhydride residue, and the monomer (II) is a diamine having the structure of general formula (II) wherein R₂ is a biphenyldiamine residue; the solvent is a mixed solvent obtained by compounding N, N-dimethylacetamide and N, N-dimethylformamide at a volume ratio of 6.3: 1;
step 2: implementing electrostatic spinning to the spinning raw material liquid in a high-voltage electric field, and collecting to obtain a felt or nonwoven fabric of polyamic acid/PSA electrospun fibers using a stainless steel mesh belt as a collector, wherein the distance between the spinneret and the stainless steel mesh belt collector is 30 cm, the electric field strength of the high voltage electrostatic field is to 320 kV/m, and the travel speed of the stainless steel mesh belt is to 3 m/min, and the polyamic acid/PSA electrospun nonwoven fabric is collected;
step 3: cutting the polyamic acid/PSA electrospun nonwoven fabric obtained above into slender strips with a width of 3.5 m, and thermally drafting and imidizing the strips to form an oriented electrospun fiber bundle with an orientation degree of 94%, wherein the thermally drafting and imidizing process parameters are: the draft processing is a three-stage 5-roll draft: in the first stage, the draft unwinding speed is 8 m/min, the draft ratio is 3 times, the draft temperature is 190°C; in the second stage, the draft unwinding speed is 5 m/min, the draft ratio is 3 times, the draft temperature is 300°C; in the third stage, the draft unwinding speed is 4 m/min, the draft ratio is 2 times, the draft temperature is 380°C;
step 4: twisting the above electrospun fiber bundle, wherein the twisting unwinding speed is to 45 m/min, and the twist degree is to 1100 twist/m, and finally an ultra-high-count filament yarn of PI/PSA electrospun composite fiber is obtained.

### Comparative example 1

Comparative example 1 provided a process for preparing an ultra-high-count filament yarn of PI-PSA electrospun fiber, which was different from the example 5 in that the non-woven fabric in the step 3 was cut into slender strips with a width of 0.1 cm.

### Comparative example 2

Comparative example 2 provided a process for preparing an ultra-high-count filament yarn of PI-PSA electrospun fiber, which was different from the example 5 in that the non-woven fabric in the step 3 was cut into slender strips with a width of 20 cm.

### Comparative example 3

Comparative example 3 provided a process for preparing an ultra-high-count filament yarn of PI-PSA electrospun fiber, which was different from the example 5 in that the draft process of the second stage was not included in the step 3.

### Comparative example 4

Comparative example 4 provided a process for preparing an ultra-high-count filament yarn of PI-PSA electrospun fiber, which was different from the example 5 in that the draft process of the third stage was not included in the step 3.

### Comparative example 5

Comparative example 5 provided a process for preparing an ultra-high-count filament yarn of PI-PSA electrospun fiber, which was different from the example 5 in that the thermally drafting and imidizing process parameters were: the draft processing was a three-stage 5-roll draft: in the first stage, the draft unwinding speed was 8 m/min, the draft ratio was 3 times, the draft temperature was 190°C; in the second stage, the draft unwinding speed was 3 m/min, the draft ratio was 2 times, the draft temperature was 380°C; in the third stage, the draft unwinding speed was 5 m/min, the draft ratio was 3 times, the draft temperature was 300°C.

### Comparative example 6

Comparative example 6 provided a process for preparing an ultra-high-count filament yarn of PI-PSA electrospun fiber, which is different from the example 5 in that the non-woven fabric in the step 3 was cut into slender strips with a width of 0.2 cm, and the draft process of the second stage was not included.

### Comparative example 7

Comparative example 7 provided a process for preparing an ultra-high-count filament yarn of PI-PSA electrospun fiber, which was different from the example 5 in that the non-woven fabric in the step 3 was cut into slender strips with a width of 10 cm, and the draft process of the second stage was not included.

### Performance evaluation

1. The mechanical properties of the fibers: the tensile strength of the fibers was determined using the universal material experiment machine Instron-12111 of the American INSTRON company; the number of test samples in each group was 5, and the average value was taken.
2. Single-strand count: the single-strand count was expressed in metric counts, i.e, the length of the fiber or yarn per unit mass (g). The number of test samples in each group was 5, and the average value was taken.
3. Continuous length: the continuous length is the length of the continuously manufactured yarn. The number of test samples in each group was 5, and the average value was taken.

**Table 1**

| | Tensile strength/cN/dtex | Single-strand count/metric count | Continuous length/meter |
|---|---|---|---|
| Example 1 | 20 | 1000 | 2020 |
| Example 2 | 23 | 1050 | 2130 |
| Example 3 | 22 | 1180 | 2360 |
| Example 4 | 24 | 1250 | 2410 |
| Example 5 | 25 | 1500 | 2660 |
| Comparative Example 1 | 14 | 460 | 1150 |
| Comparative Example 2 | 16 | 530 | 1330 |
| Comparative Example 3 | 18 | 380 | 1140 |
| Comparative Example 4 | 18 | 500 | 1110 |
| Comparative Example 5 | 17 | 540 | 1480 |
| Comparative Example 6 | 14 | 360 | 1010 |
| Comparative Example 7 | 15 | 350 | 1200 |

## Claims

1. A process for preparing an ultra-high-count filament yarn of polyimide (PI)- polysulfonamide (PSA) electrospun fiber, comprising the steps of:
step 1: after a monomer (I) and a monomer (II) are purified, adding the monomer (I) and the monomer (II) to a polymerization reactor together with a solvent to obtain a polyamic acid solution, then mechanically mixing with PSA to obtain a spinning raw material liquid of the polyamic acid and the PSA;
step 2: implementing electrostatic spinning to the spinning raw material liquid in a high-voltage electric field, and collecting to obtain a polyamic acid/PSA electrospun fiber felt or nonwoven fabric using a stainless steel mesh belt as a collector;
step 3: cutting the polyamic acid/PSA electrospun fiber felt or nonwoven fabric obtained above into slender strips with a width of 0.5 to 5.0 cm, and thermally drafting and imidizing the strips to form an oriented electrospun fiber bundle;
step 4: twisting the above electrospun fiber bundle to obtain an ultra-high-count filament yarn of PI-PSA electrospun composite fibers,
wherein, the monomer (I) is a dianhydride which has the following structural formula: 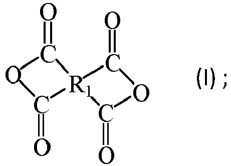
the monomer (II) is a diamine which has the following structural formula :
H₂N-R₂-NH₂ (II);
the obtained polyimide has the following chemical structure formula: 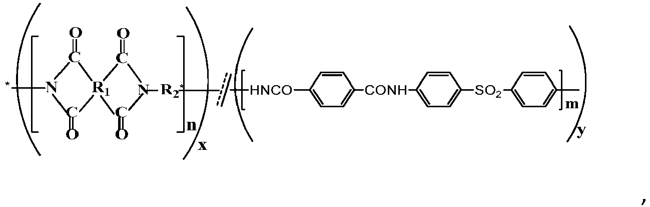
wherein n and m values are natural numbers between 100 and 500; R₁ is the residue structure of C4-C30 dianhydride monomer, and is one or more selected from the group consisting of pyromelliticdianhydride group, biphenyl dianhydride residue, diphenylsulfonedianhydride residue, triphenylenedietherdianhydride residue, terephthalicdianhydride residue, 2.6-biphenyl pyrimidine dianhydride residue, benzophenonedianhydride residue, 3,6 bridged alkene cyclohexane tetracarboxylicdianhydride residue, hexafluoroacetonediphenyldianhydride residue, diphenoldiphenyldietherdianhydride residue, diphenyl sulfide dianhydride residue, diphenyl sulfide dianhydride residue, and2,2-acetone biphenyl dianhydride residue; R₂ is the residue structure of C6-C30 diamine monomer and is one or more selected from the group consistingof diphenyl ether diamine residue, p-phenylenediamine residue, dimethoxybenzidine residue, diphenylmethanediamine residue, m-phenylenediamine residue, biphenyldiamine residue, diphenoxydiphenoldiamine residue, 2-methyldiphenyl ether diamine residue, 2,6-pyrimidine diphenyldiamine residue, and (3,3'-dimethyl) diphenylmethanediamine residue; the ratio of two polymers PI and PSA, i.e, the mass ratio x/y = (1-9): (1-9).

2. The process for preparing the ultra-high-count filament yarn of PI-PSA electrospun fiber according to claim 1, **characterized in that** the solvent during the preparation of the spinning raw material liquid is a polar organic solvent and is one or more selected from the group consisting of N, N-dimethylformamide, N-methylpyrrolidone, dimethylsulfoxide, and N, N-dimethylacetamide.

3. The process for preparing the ultra-high-count filament yarn of PI-PSA electrospun fiber according to claim 1 or 2, **characterized in that** a reaction condition during the preparation of the spinning raw material liquid is: the polymerization reaction temperature of the stainless steel reactor is 0 to 30°C, and the reaction time is 1 to 10 hours to obtain a polyamic acid solution, and then adding a PSA powder or a PSA staple fiber to the polyamic acid solution, mechanically stirring at 0 to 30°C to dissolve and mix, and finally adding N, N-dimethylacetamide for dilution.

4. The process for preparing the ultra-high-count filament yarn of PI-PSA electrospun fiber according to any one of claims 1 to 3, **characterized in that** the processing parameters of the electrostatic spinning are: the distance between the spinneret and the stainless steel mesh belt collector is 8 to 50 cm, the electric field strength of the high voltage electrostatic field is 100 to 650 kV/m, and the travel speed of the stainless steel mesh belt is 0.2 to 5 m/min.

5. The process for preparing the ultra-high-count filament yarn of PI-PSA electrospun fiber according to any one of claims 1 to 4 , **characterized in that** the thermally drafting and imidizing process parameters are: the draft processing is a three-stage 5-roll draft: in the first stage, the draft unwinding speed is 5 to 10 m/min, the draft ratio is 1 to 5 times, the draft temperature is 160 to 220 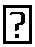 ; the second stage, the draft unwinding speed is 3 to 8 m/min, the draft ratio is 1 to 5 times, the draft temperature is 280 to 320°C; in the third stage, the draft unwinding speed is 1 to 5 m/min, the draft ratio is 1 to 3 times, the draft temperature is 350 to 400 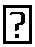 .

6. The process for preparing the ultra-high-count filament yarn of PI- PSA electrospun fibers according to any one of claims 1 to 5, **characterized in that** the twisting process parameters are: the twisting unwinding speed is 5 to 80 m/min, and the twist degree is 300 to 2500 twist/m.

7. An ultra-high-count filament yarn of PI-PSA electrospun fiber, which is prepared by the process according to any one of claims 1 to 6.

8. The ultra-high-count filament yarn of PI-PSA electrospun fiber according to claim 7, **characterized in that** the single-strand yarn of the ultra-high-count filament yarn of PI-PSA electrospun fiber has a count of 500-1500 m/g and a continuous length of more than 2000 meters.

9. High-grade fabrics, high-grade clothing, ultra-thin high-performance fiber cloth, high-performance composite membrane materials, high-performance composite board materials, high-performance cordages and cables comprising the ultra-high-count filament yarn of PI-PSA electrospun fiber according to claim 7 or 8.

## Patentansprüche

1. Verfahren zur Herstellung eines ultrahochfesten Filamentgarns aus einer elektrogesponnenen Polyimid (Pl)-Polysulfonamid (PSA)-Faser, umfassend die Schritte:
Schritt 1: nachdem ein Monomer (I) und ein Monomer (II) gereinigt wurden, Zugabe des Monomers (I) und des Monomers (II) zu einem Polymerisationsreaktor zusammen mit einem Lösungsmittel, um eine Polyamidsäurelösung zu erhalten, dann mechanisches Mischen mit PSA, um eine Spinnrohstoffflüssigkeit aus der Polyamidsäure und dem PSA zu erhalten;
Schritt 2: elektrostatisches Spinnen des flüssigen Spinnrohstoffs in einem elektrischen Hochspannungsfeld und Sammeln, um einen elektrogesponnenen Polyamidsäure/PSA-Faserfilz oder -Vliesstoff zu erhalten, wobei ein Netzband aus rostfreiem Stahl als Sammler verwendet wird;
Schritt 3: Schneiden des oben erhaltenen Polyamidsäure/PSA-Elektrospinnfaserfilzes oder -vlieses in schmale Streifen mit einer Breite von 0,5 bis 5,0 cm und thermisches Verstrecken und Imidisieren der Streifen zur Bildung eines orientierten Elektrospinnfaserbündels;
Schritt 4: Verdrillen des obigen elektrogesponnenen Faserbündels, um ein ultrahochfädiges Filamentgarn aus elektrogesponnenen Pl-PSA-Verbundfasern zu erhalten,
wobei das Monomer (I) ein Dianhydrid ist, das die folgende Strukturformel aufweist: 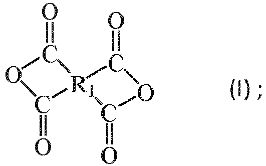
das Monomer (II) ein Diamin ist, das die folgende Strukturformel aufweist:
H₂N-R₂-NH₂ (II);
das erhaltene Polyimid hat die folgende chemische Strukturformel: 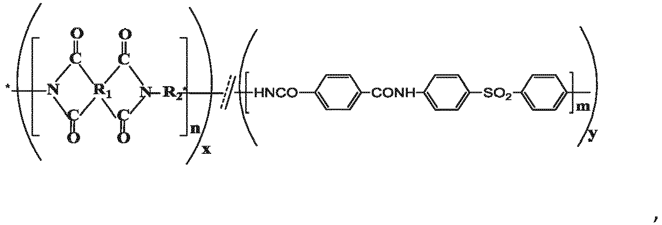
worin n und m natürliche Zahlen zwischen 100 und 500 sind; R1 die Reststruktur des C4-C30-Dianhydridmonomers ist und eines oder mehrere aus der Gruppe bestehend aus Pyromellitsäuredianhydridgruppe, Biphenyldianhydridrest, Diphenylsulfondianhydridrest, Triphenylendietherdianhydridrest, Terephthalsäuredianhydridrest, 2. 6-Biphenylpyrimidindianhydrid-Rest, Benzophenondianhydrid-Rest, 3,6-verbrückter Alkencyclohexantetracarbonsäuredianhydrid-Rest, Hexafluoracetondiphenyldianhydrid-Rest, Diphenoldiphenyldietherdianhydrid-Rest, Diphenylsulfiddianhydrid-Rest, Diphenylsulfiddianhydrid-Rest und2,2-Acetonbiphenyldianhydrid-Rest; R2 die Reststruktur eines C6-C30-Diaminmonomers ist und eines oder mehrere ist/sind, ausgewählt aus der Gruppe bestehend aus Diphenyletherdiaminrest, p-Phenylendiaminrest, Dimethoxybenzidinrest, Diphenylmethandiaminrest, m-Phenylendiamin-Rest, Biphenyldiamin-Rest, Diphenoxydiphenoldiamin-Rest, 2-Methyldiphenylether-Diamin-Rest, 2,6-Pyrimidin-Diphenyldiamin-Rest und (3,3'-Dimethyl)-Diphenylmethandiamin-Rest; das Verhältnis der beiden Polymere PI und PSA, d. h. das Massenverhältnis x/y d. h., das Massenverhältnis x/y = (1-9): (1-9).

2. Verfahren zur Herstellung des ultrahochfesten Filamentgarns aus elektrogesponnener Pl-PSA-Faser nach Anspruch 1, **dadurch gekennzeichnet, dass** das Lösungsmittel während der Herstellung der Spinnrohstoff-Flüssigkeit ein polares organisches Lösungsmittel ist und eines oder mehrere aus der Gruppe bestehend aus N,N-Dimethylformamid, N-Methylpyrrolidon, Dimethylsulfoxid und N,N-Dimethylacetamid ausgewählt sind.

3. Verfahren zur Herstellung des ultrahochfesten Filamentgarns aus elektrogesponnener PI-PSA-Faser nach Anspruch 1 oder 2, **dadurch gekennzeichnet, dass** eine Reaktionsbedingung während der Herstellung des Spinnrohstoffs Flüssigkeit ist: die Polymerisationsreaktionstemperatur des Edelstahlreaktors 0 bis 30°C beträgt und die Reaktionszeit 1 bis 10 Stunden beträgt, um eine Polyamidsäurelösung zu erhalten, und dann ein PSA-Pulver oder eine PSA-Stapelfaser zu der Polyamidsäurelösung zugegeben wird, mechanisch bei 0 bis 30°C gerührt wird, um sie aufzulösen und zu mischen, und schließlich N,N-Dimethylacetamid zur Verdünnung zugegeben wird.

4. Verfahren zur Herstellung des ultrahochfesten Filamentgarns aus elektrogesponnener PI-PSA-Faser nach einem der Ansprüche 1 bis 3, **dadurch gekennzeichnet, dass** die Verfahrensparameter des elektrostatischen Spinnens sind: der Abstand zwischen der Spinndüse und dem Kollektor des Edelstahlmaschenbandes beträgt 8 bis 50 cm, die elektrische Feldstärke des elektrostatischen Hochspannungsfeldes beträgt 100 bis 650 kV/m, und die Laufgeschwindigkeit des Edelstahlmaschenbandes beträgt 0,2 bis 5 m/min.

5. Verfahren zur Herstellung eines ultrahochfesten Filamentgarns aus elektrogesponnenen PI-PSA-Fasern nach einem der Ansprüche 1 bis 4, **dadurch gekennzeichnet, dass** die Parameter des thermischen Verstreckungs- und Imidisierungsprozesses folgende sind: Das Streckverfahren ist ein dreistufiges 5-Walzen-Verfahren: in der ersten Stufe beträgt die Abwicklungsgeschwindigkeit des Streckwerks 5 bis 10 m/min, das Streckverhältnis beträgt das 1- bis 5-fache, die Strecktemperatur beträgt 160 bis 220 °C; in der zweiten Stufe beträgt die Abwicklungsgeschwindigkeit des Streckwerks 3 bis 8 m/min, das Streckverhältnis beträgt das 1- bis 5-fache, die Strecktemperatur beträgt 280 bis 320°C; in der dritten Stufe beträgt die Abwicklungsgeschwindigkeit des Streckwerks 1 bis 5 m/min, das Streckverhältnis beträgt das 1- bis 3-fache, die Strecktemperatur beträgt 350 bis 400 °C.

6. Verfahren zur Herstellung eines ultrahochfesten Filamentgarns aus elektrogesponnenen PI- PSA-Fasern nach einem der Ansprüche 1 bis 5, **dadurch gekennzeichnet, dass** die Parameter des Zwirnverfahrens sind: die Geschwindigkeit des Abdrehens des Zwirns beträgt 5 bis 80 m/min, und der Zwirngrad beträgt 300 bis 2500 Zwirne/m.

7. Ultrahochfädiges Filamentgarn aus elektrogesponnener PI-PSA-Faser, das nach dem Verfahren nach einem der Ansprüche 1 bis 6 hergestellt ist.

8. Ultrahochfädiges Filamentgarn aus elektrogesponnener PI-PSA-Faser nach Anspruch 7, **dadurch gekennzeichnet, dass** das Einzelstranggarn des ultrahochfädigen Filamentgarns aus elektrogesponnener PI-PSA-Faser eine Feinheit von 500-1500 m/g und eine kontinuierliche Länge von mehr als 2000 Metern aufweist.

9. Hochwertige Gewebe, hochwertige Kleidung, ultradünne Hochleistungsfasergewebe, Hochleistungs-Verbundmembranmaterialien, Hochleistungs-Verbundplattenmaterialien, Hochleistungsseile und -kabel, die das ultrahochfädige Filamentgarn aus PI-PSA-Elektrospinnfasern nach Anspruch 7 oder 8 enthalten.

## Revendications

1. Procédé de préparation d'un filament à très haute densité de fibres électrofilées en polyimide (PI)- polysulfonamide (PSA), comprenant les étapes suivantes :
étape 1 : après purification d'un monomère (I) et d'un monomère (II), ajout du monomère (I) et du monomère (II) à un réacteur de polymérisation avec un solvant pour obtenir une solution d'acide polyamique, puis mélange mécanique avec du PSA pour obtenir un liquide de matière première de filature de l'acide polyamique et du PSA ;
étape 2 : filage électrostatique de la matière première liquide de filage dans un champ électrique à haute tension, et collecte pour obtenir un feutre de fibres électrofilées d'acide polyamique/PSA ou un tissu non tissé à l'aide d'une bande à mailles en acier inoxydable comme collecteur;
étape 3 : couper le feutre de fibres électrofilées d'acide polyamique/PSA ou le tissu non tissé obtenu ci-dessus en bandes minces d'une largeur de 0,5 à 5,0 cm, et étirer thermiquement et imidifier les bandes pour former un faisceau de fibres électrofilées orientées ;
étape 4 : torsion du faisceau de fibres électrofilées susmentionné pour obtenir un filament de fibres composites électrofilées PI-PSA à très haut rendement,
dans lequel le monomère (I) est un dianhydride dont la formule structurelle est la suivante : 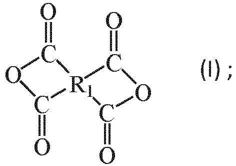
le monomère (II) est une diamine qui a la formule structurelle suivante : (I) ; le monomère (II) est une diamine qui a la formule structurelle suivante :
H₂N-R₂-NH₂ (II);
le polyimide obtenu a la formule chimique suivante : 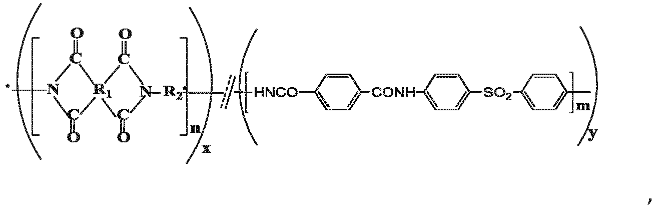
dans laquelle les valeurs n et m sont des nombres naturels compris entre 100 et 500 ; R1 est la structure du résidu du monomère dianhydride C4-C30, et est un ou plusieurs choisis dans le groupe constitué du groupe pyromellitiquedianhydride, du résidu dianhydride biphényle, du résidu diphénylsulfonedianhydride, du résidu triphénylènediétherdianhydride, du résidu dianhydride téréphtalique, du résidu dianhydride 2. 6-biphényl pyrimidine dianhydride résidu, benzophénonedianhydride résidu, 3,6 bridged alkene cyclohexane tetracarboxylicdianhydride résidu, hexafluoroacetonediphényldianhydride résidu, résidu dianhydride de diphénoldiphényldiéther, résidu dianhydride de sulfure de diphényle, résidu dianhydride de sulfure de diphényle et résidu dianhydride de 2,2-acétone biphényle ; R2 est la structure de résidu du monomère de diamine C6-C30 et est un ou plusieurs choisi(s) dans le groupe consistant en résidu de diphényl éther diamine, résidu de p-phénylènediamine, résidu de diméthoxybenzidine, résidu de diphénylméthanediamine, résidu de m-phénylènediamine, m-phénylènediamine, biphényldiamine, diphénoxydiphénoldiamine, 2-méthyldiphényl éther diamine, 2,6-pyrimidine diphényldiamine et (3,3'-diméthyl) diphénylméthanediamine ; le rapport entre deux polymères PI et PSA, c'est-à-dire le rapport de masse x/y. e, le rapport de masse x/y = (1-9) : (1-9).

2. Procédé de préparation du filament à très haut titre de fibres PI-PSA électrofilées selon la revendication 1, **caractérisé en ce que** le solvant utilisé lors de la préparation de la matière première liquide de filature est un solvant organique polaire et est un ou plusieurs choisis dans le groupe constitué de N, N-diméthylformamide, N-méthylpyrrolidone, diméthylsulfoxyde, et N, N-diméthylacétamide.

3. Le procédé de préparation du fil de filament à très haut rendement de la fibre électrofilée PI-PSA selon la revendication 1 ou 2, **caractérisé en ce qu'**une condition de réaction pendant la préparation de la matière première liquide de filature est : la température de réaction de polymérisation du réacteur en acier inoxydable est de 0 à 30°C, et le temps de réaction est de 1 à 10 heures pour obtenir une solution d'acide polyamique, puis l'ajout d'une poudre de PSA ou d'une fibre discontinue de PSA à la solution d'acide polyamique, l'agitation mécanique à 0 à 30°C pour dissoudre et mélanger, et enfin l'ajout de N, N-diméthylacétamide pour la dilution.

4. Procédé de préparation du filament à très haut titre de fibres PI-PSA électrofilées selon l'une quelconque des revendications 1 à 3, **caractérisé en ce que** les paramètres de traitement du filage électrostatique sont les suivants : la distance entre la filière et le collecteur de la bande à mailles en acier inoxydable est de 8 à 50 cm, l'intensité du champ électrique du champ électrostatique à haute tension est de 100 à 650 kV/m, et la vitesse de déplacement de la bande à mailles en acier inoxydable est de 0,2 à 5 m/min.

5. Le procédé de préparation du fil de filament à très haut titre de la fibre électrofilée PI-PSA selon l'une quelconque des revendications 1 à 4, **caractérisé en ce que** les paramètres du procédé d'étirage thermique et d'imidification sont les suivants : le traitement d'étirage est un étirage en trois étapes à 5 rouleaux : dans la première étape, la vitesse de déroulement de l'étirage est de 5 à 10 m/min, le rapport d'étirage est de 1 à 5 fois, la température d'étirage est de 160 à 220°C ; dans la deuxième étape, la vitesse de déroulement de l'étirage est de 3 à 8 m/min, le rapport d'étirage est de 1 à 5 fois, la température d'étirage est de 280 à 320°C ; dans la troisième étape, la vitesse de déroulement de l'étirage est de 1 à 5 m/min, le rapport d'étirage est de 1 à 3 fois, la température d'étirage est de 350 à 400°C.

6. Le procédé de préparation du fil de filament à très haut titre de fibres électrofilées PI- PSA selon l'une quelconque des revendications 1 à 5, **caractérisé en ce que** les paramètres du procédé de torsion sont : la vitesse de déroulement de la torsion est de 5 à 80 m/min, et le degré de torsion est de 300 à 2500 torsions/m.

7. Fil de filament à très haute teneur en fibres PI-PSA électrofilées, préparé par le procédé selon l'une quelconque des revendications 1 à 6.

8. Fil de filament à comptage ultra-élevé de fibre PI-PSA électrofilée selon la revendication 7, **caractérisé en ce que** le fil monobrin du fil de filament à comptage ultra-élevé de fibre PI-PSA électrofilée a un comptage de 500-1500 m/g et une longueur continue de plus de 2000 mètres.

9. Tissus de qualité supérieure, vêtements de qualité supérieure, tissus de fibres ultra-minces de haute performance, matériaux de membranes composites de haute performance, matériaux de panneaux composites de haute performance, cordages et câbles de haute performance comprenant le fil de filaments de PI-PSA électrofilés à très haut titre selon la revendication 7 ou 8.
